# EUROPEAN PATENT APPLICATION

(11) **EP 1 837 867 A1**
(43) Date of publication of application: **26.09.2007**
(21) Application number: 06711658.2
(22) Date of filing: 13.01.2006
(51) Int. Cl.: G11B 7/0045, G11B 7/007, G11B 7/125

(54) **RECORDING DEVICE, RECORDING METHOD, AND COMPUTER PROGRAM**

(30) Priority: 14.01.2005 JP 2005008447
(71) Applicant: Pioneer Design Corporation, Meguro-ku, Tokyo 153-8654 (JP)
(72) Inventor: HASEBE, Tsuyoshi c/o Pioneer Corporation, Tokorozawa-shi, Saitama 359-8522 (JP); YOSHIDA, Masayoshi c/o Pioneer Corporation, Tokorozawa-shi, Saitama 359-8522 (JP)
(74) Representative: Viering, Jentschura & Partner
(86) International application number: PCT/JP2006/300373
(87) International publication number: WO 2006/075703

(57) **Abstract**

A recording apparatus (200) is provided with: a recording device (351) for recording record information with a variable recording power; a recording control device (354) for controlling the recording device to record the record information to be adjacent to an unrecorded portion; a power controlling device (361) for controlling the recording power such that the recording power in recording the record information which is recorded adjacent to the unrecorded portion is weaker than the recording power in recording the record information other than the record information which is recorded adjacent to the unrecorded portion; and an overwrite controlling device (362) for controlling the recording device to overwrite the recorded portion adjacent to the unrecorded portion with overwrite information in which a ratio of presence of a mark signal component is smaller than a ratio of presence of a space signal component.

## Description

### Technical Field

The present invention relates to a recording apparatus and method, such as a DVD recorder, and a computer program which makes a computer function as the recording apparatus.

### Background Art

A recording medium, such as a DVD, capable of readily recording content data, such as video images and audio, and other various data has become popular. Moreover, in order to record a larger data-amount of the content data and the other various data onto one recording medium, there has been developed a dual-layer type recording medium on which two recording layers are laminated, which is partially already commercialized.

In order to preferably record a larger data-amount of the content data and the other various data onto such a recording medium, it is necessary to calibrate the power of laser light, which is irradiated to record the data. The power calibration is performed by recording an OPC pattern into a PCA (Power Calibration Area), an IDTA (Inner Disc Testing Area), an ODTA (Outer Disc Testing Area), or the like. The process related to the power calibration is generally referred to as OPC (Optimum Power Control).

On the other hand, in the dual-layer type recording medium, a middle area to prevent the runaway of an optical pickup for irradiating the laser light is generated immediately before the ODTA located on the outer circumferential side, at the time of finalize process. The middle area needs to have a certain size or a size larger than the certain size, in order to preferably prevent the runaway of the optical pickup. Thus, predetermined data having a middle area attribute is recorded throughout a wide range of area including the ODTA, from the start position of the middle area determined in advance or determined upon the finalizing. Namely, in the ODTA, the OPC pattern recorded in calibrating the power of the laser light is overwritten with the predetermined data having the middle area attribute.

### Disclosure of Invention

### Subject to be Solved by the Invention

On the other hand, from the viewpoint of maintaining a drive's stable operation, even if the laser light irradiated from the optical pickup is focused on the ODTA, it is preferable that at least a sector ID can be read. Thus, when the OPC pattern is recorded into the ODTA, such a countermeasure is considered that, for example, three sectors per one ECC block are left as an unrecorded portion by not recording the OPC pattern therein. By this, it is believed that at least the sector ID can be read even after the ODTA is overwritten with the predetermined data having the middle area attribute.

However, if the ODTA is actually overwritten with the predetermined data having the middle data attribute, the quality of the reproduction signal of the OPC pattern overwritten with the predetermined data deteriorates more than expected, which causes such a technical problem that it can be difficult to read the sector ID of the sector daringly left as the unrecorded portion. Moreover, in the above-mentioned countermeasure, an explanation featuring the ODTA is given. However, in the case where a recording area adjacent to the sector left as the unrecorded portion is overwritten with the predetermined data, the same technical problem can occur. Namely, it can cause such a technical problem that it can be difficult to preferably read various information which is originally intended to be read from the sector left as the unrecorded portion.

It is therefore an object of the present invention to provide a recording apparatus and method, which preferably enable subsequent data reading (particularly, reading of data normally recorded in the sector left as the unrecorded portion) even if the recording area adjacent to the sector left as the unrecorded portion is overwritten with predetermined data, as well as a computer program.

### Means for Solving the Subject

### (Recording Apparatus)

The above object of the present invention can be achieved by a first recording apparatus provided with: a recording device for recording record information with a variable recording power; a recording control device for controlling the recording device to record the record information to be adjacent to an unrecorded portion where the record information is not recorded; and a power controlling device for controlling the recording power such that the recording power in recording the record information which is recorded adjacent to the unrecorded portion out of the record information recorded under control of the recording control device is weaker than the recording power in recording the record information other than the record information which is recorded adjacent to the unrecorded portion.

According to the first recording apparatus of the present invention, by the operation of the recording device, the record information can be recorded onto a recording medium. The recording device can record the record information while changing the recording power of laser light or the like, as needed. At this time, by the operation of the recording control device, the recording device is controlled to record the record information such that the record information is recorded so as to be adjacent to the unrecorded portion where the record information is not recorded, as needed. Namely, the record information is recorded such that a recorded portion where the record information is recorded is adjacent to the unrecorded portion. Of course, it is only necessary to record the record information such that the recorded portion and the unrecorded portion are adjacent in a partial recording area of the recording medium, and the record information is not necessarily recorded in the above manner on the entire recording medium.

Particularly in the first recording apparatus, if the record information is recorded under the control of the recording control device (i.e. if the record information is recorded such that the recorded portion and the unrecorded portion are adjacent), the recording power is controlled by the operation of the power controlling device. The power controlling device controls the recording power and the recording device such that the recording power in recording the record information which is recorded so as to be adjacent to the unrecorded portion out of the record information recorded as one recorded portion is weaker than the recording power in recording the record information other than the record information which is recorded so as to be adjacent to the unrecorded portion (i.e. the record information which is not adjacent to the unrecorded portion). More specifically, the power controlling device controls the recording power such that the recording power in recording a predetermined unit of the record information which is recorded so as to be adjacent to the unrecorded portion is weaker than the recording power in recording the record information other than the predetermined unit of the record information. Incidentally, the "control of the recording power" may be directly performed by specifying a value of the recording power, or may be indirectly performed by specifying another parameter, such as a pattern of the record information to be recorded, as described later. In short, any operation which can result in a change of the recording power of the recording device in recording the record information is, in effect, included in a range of the "control of the recording power" herein.

As described above, by controlling the recording power such that the recording power in recording the record information which is recorded so as to be adjacent to the unrecorded portion is weaker than the recording power in recording the record information other than the record information which is recorded so as to be adjacent to the unrecorded portion, the following benefits can be received. For example, in performing a finalize process of the recoding medium, in some cases, predetermined overwrite information is recorded on the recorded portion adjacent to the unrecorded portion, and dummy information or the like is recorded into the unrecorded portion. In this case, there is a possibility that the data normally recorded in the unrecorded portion (e.g. recorded control data, such as the sector ID) cannot be read any more, due to the fact that the overwrite information interferes with the record information recorded in the recorded portion. This is because, as will be explained later in detail by using drawings in the embodiments, the recording power in recording the record information becomes strong in an end edge portion of the recorded portion (i.e. an edge portion of the recorded portion adjacent to the unrecorded portion). Thus, a reproduction signal obtained by reproducing the unrecorded portion where the dummy information is recorded is influenced by a reproduction signal obtained by reproducing the recorded portion which is overwritten with the overwrite information, and it has a relatively high level compared to a center potential. As a result, the portion where the dummy data is recorded in the unrecorded portion cannot be preferably reproduced. However, in the first recording apparatus, the record information is recorded into the end edge portion of the recorded portion with a relatively weak recording power. Therefore, the above-mentioned disadvantage can be preferably avoided. Namely, even if the recording area adjacent to the recording area left unrecorded is overwritten with the predetermined overwrite information, it is possible to preferably perform subsequent data reading (particularly, reading of data normally recorded in the recording area left as the unrecorded portion).

In one aspect of the first recording apparatus of the present invention, the recording control device controls the recording device to record calibration information for calibrating the recording power to be adjacent to the unrecorded portion, when the calibration information is recorded as the record information.

According to this aspect, even if the calibration information is recorded while preparing the unrecorded portion and the unrecorded portion is overwritten with the overwrite information in the finalize process, the reproduction signal does not deteriorate so badly, and it is possible to preferably read the data normally recorded in the recording area left as the unrecorded portion.

In another aspect of the first recording apparatus of the present invention, the recording control device controls the recording device to record the record information such that an end edge portion of a recorded portion where the record information is already recorded is adjacent to the unrecorded portion.

According to this aspect, even if the unrecorded portion adjacent to the end edge portion of the recorded portion is overwritten with the predetermined overwrite information, the reproduction signal does not deteriorate so badly, and it is possible to preferably read the data recorded in the recording area left as the unrecorded portion.

In another aspect of the first recording apparatus of the present invention, the recording control device controls the recording device to record the record information such that at least one of a start edge portion and an end edge portion of a recorded portion where the record information is already recorded is adjacent to the unrecorded portion, and the power controlling device controls the recording power such that the recording power in recording the record information which is recorded at least in the end edge portion is weaker than the recording power in recording the record information other than the record information which is recorded at least in the end edge portion.

According to this aspect, even if the unrecorded portion adjacent to the end edge portion of the recorded portion is overwritten with the predetermined overwrite information, the reproduction signal does not deteriorate so badly, and it is possible to preferably read the data recorded in the recording area left as the unrecorded portion.

In another aspect of the first recording apparatus of the present invention, the power controlling device controls the recording power such that the record information which is recorded under the control of the recording control device is recorded with a recording power which decreases in a stepwise manner by a predetermined amount or which decreases continuously by a predetermined ratio.

According to this aspect, it is only necessary to change the recording power to monotonically decrease. Thus, it is possible to receive the above-mentioned various benefits, relatively easily, without complicated power control.

In another aspect of the first recording apparatus of the present invention, it is further provided with an overwrite controlling device for controlling the recording device to overwrite a recorded portion where the record information is already recorded adjacent to the unrecorded portion, with overwrite information as the record information, the overwrite information being for overwriting in which a ratio of presence of a mark signal component is smaller than a ratio of presence of a space signal component.

According to this aspect, it is possible to realize the recording apparatus combined with the characteristic configuration of a second recording apparatus described later. Therefore, even if the recording area adjacent to the recording area left as the unrecorded portion is overwritten with the predetermined overwrite information, it is possible to more preferably perform the subsequent data reading (particularly, reading of data normally recorded in the recording area left as the unrecorded portion).

Incidentally, in response to various aspects of the second recording apparatus of the present invention described later, this aspect can be further constructed as various aspects.

The above object of the present invention can be also achieved by a second recording apparatus provided with: a recording device for recording record information; and an overwrite controlling device for controlling the recording device to overwrite a recorded portion where the record information is already recorded adjacent to an unrecorded portion where the record information is not recorded, with overwrite information as the record information, the overwrite information being for overwriting in which a ratio of presence of a mark signal component is smaller than a ratio of presence of a space signal component.

According to the second recording apparatus of the present invention, by the operation of the recording device, the record information can be recorded onto a recording medium.

Particularly in the second recording apparatus, by the operation of the overwrite controlling device, the recorded portion adjacent to the unrecorded portion is overwritten with the overwrite information as the record information. The overwrite information is for overwriting and the ratio of presence of the mark signal component (particularly, the ratio of the presence based on a time axis) in the overwrite information is smaller than the ratio of presence of the space signal component in the overwrite information. More specifically, for example, as described later, the overwriting is performed with the overwrite information defined by the mark signal component having a relatively small signal width and the space signal component having a relatively large signal width. The overwriting of the overwrite information is performed in the finalize process, for example. Moreover, in the finalize process, the dummy information or the like is also recorded in the unrecorded portion.

If the ratio of presence of the mark signal component is relatively small and the ratio of presence of the space signal component is relatively large, the overwrite information constitutes recording pits which are relatively bright on the recording medium. Here, if the recorded portion overwritten with the overwrite information is reproduced, both the record information and the overwrite information interfere, so that a relatively dark reproduction signal tends to be obtained. Namely, the reproduction signal having a relatively high level compared to the center potential tends to be able to be obtained. Due to the reproduction signal having the relatively high level, the reproduction signal of the unrecorded portion after the recording of the dummy information also becomes at a relatively high level compared to the center potential. As a result, there is a possibility that the data of the dummy information recorded in the unrecorded portion cannot be read. However, in the second recording apparatus, the recorded portion is overwritten with the overwrite information which allows the relatively bright reproduction signal to be obtained. Therefore, by reproducing the recorded portion overwritten with the overwrite information and the unrecorded portion with the dummy information recorded, it is easy to obtain not only the reproduction signal having the relatively high level compared to the center potential, but also the reproduction signal having a level near the center potential. Therefore, even if the recording area adjacent to the recording area left unrecorded is overwritten with the predetermined overwrite information, it is possible to preferably perform the subsequent data reading (particularly, reading of data normally recorded in the recording area left as the unrecorded portion).

In one aspect of the second recording apparatus of the present invention, the overwrite controlling device controls the recording device to overwrite the recorded portion which is adjacent to the unrecorded portion and where calibration information for calibrating a recording power of the recording device is recorded as the record information, with the overwrite information as the record information.

According to this aspect, even if the calibration information is recorded while preparing the unrecorded portion and it is overwritten with the overwrite information in the finalize process, the reproduction signal does not deteriorate so badly, and it is possible to preferably read the data normally recorded in the recording area left as the unrecorded portion.

In another aspect of the second recording apparatus of the present invention, the overwrite controlling device controls the recording device to record the overwrite information as the record information into the recorded portion at least whose end edge portion is adjacent to the unrecorded portion.

According to this aspect, even if the unrecorded portion adjacent to the end edge portion of the recorded portion is overwritten with the overwrite information, the reproduction signal does not deteriorate so badly, and it is possible to preferably read the data normally recorded in the recording area left as the unrecorded portion.

In another aspect of the second recording apparatus of the present invention, the overwrite controlling device controls the recording device to record the overwrite information in which a signal width of the mark signal component is smaller than a signal width of the space signal component, as the record information.

According to this aspect, it is possible to relatively easily overwrite the recorded portion with the overwrite information which allows the relatively bright reproduction signal to be obtained. Therefore, even if the recording area adjacent to the recording area left unrecorded is overwritten with the predetermined overwrite information, it is possible to preferably perform the subsequent data reading (particularly, reading of data normally recorded in the recording area left as the unrecorded portion).

In another aspect of the second recording apparatus of the present invention, the recording device record the record information with a variable recording power, and the recording apparatus is further provided with a power controlling device for controlling the recording power such that the recording power in recording the record information which is recorded adjacent to the unrecorded portion out of the record information which is recorded adjacent to the unrecorded portion is weaker than the recording power in recording the record information other than the record information which is recorded adjacent to the unrecorded portion.

According to this aspect, it is possible to realize the recording apparatus combined with the characteristic configuration of the first recording apparatus described above. Therefore, even if the recording area adjacent to the recording area left as the unrecorded portion is overwritten with the predetermined overwrite information, it is possible to more preferably perform the subsequent data reading (particularly, reading of data normally recorded in the recording area left as the unrecorded portion).

Incidentally, in response to various aspects of the first recording apparatus of the present invention described above, this aspect can be further constructed as other various aspects.

### (Recording Method)

The above object of the present invention can be also achieved by a first recording method in a recording apparatus provided with: a recording device for recording record information with a variable recording power, the recoding method provided with: a recording control process of controlling the recording device to record the record information to be adjacent to an unrecorded portion where the record information is not recorded; and a power controlling process of controlling the recording power such that the recording power in recording the record information which is recorded adjacent to the unrecorded portion out of the record information recorded under control of the recording control device is weaker than the recording power in recording the record information other than the record information which is recorded adjacent to the unrecorded portion.

According to the first recording method of the present invention, it is possible to receive the same various benefits as those owned by the first recording apparatus of the present invention described above.

Incidentally, in response to various aspects of the first recording apparatus of the present invention described above, the first recording method of the present invention can also adopt various aspects.

The above object of the present invention can be also achieved by a second recording method in a recording apparatus provided with: a recording device for recording record information, the recording method provided with: a recording control process of controlling the recording device to record the record information; and an overwrite controlling process of controlling the recording device to overwrite a recorded portion where the record information is already recorded adjacent to an unrecorded portion where the record information is not recorded, with overwrite information as the record information, the overwrite information being for overwriting in which a ratio of presence of a mark signal component is smaller than a ratio of presence of a space signal component.

According to the second recording method of the present invention, it is possible to receive the same various benefits as those owned by the second recording apparatus of the present invention described above.

Incidentally, in response to various aspects of the second recording apparatus of the present invention described above, the second recording method of the present invention can also adopt various aspects.

### (Computer Program)

The above object of the present invention can be also achieved by a first computer program for recording control to control a computer provided in the above-mentioned first recording apparatus of the present invention (including its various aspects), to make the computer function as at least one portion of the recording apparatus (specifically, for example, at least one of the recording control device and the power controlling device). Moreover, the above object of the present invention can be also achieved by a second computer program for recording control to control a computer provided in the above-mentioned second recording apparatus of the present invention (including its various aspects), to make the computer function as at least one portion of the recording apparatus (specifically, for example, the overwrite controlling device).

According to each of the computer programs of the present invention, the above-mentioned first or second recording apparatus of the present invention can be relatively easily realized as a computer reads and executes the computer program from a program storage device, such as a ROM, a CD-ROM, a DVD-ROM, and a hard disk, or as it executes the computer program after downloading the program through a communication device.

Incidentally, in response to the various aspects of the above-mentioned first or second recording apparatus of the present invention, the first or second computer program of the present invention can adopt various aspects.

The above object of the present invention can be also achieved by a first computer program product in a computer-readable medium for tangibly embodying a program of instructions executable by a computer provided in the above-mentioned first recording apparatus of the present invention (including its various aspects), to make the computer function as at least one portion of the recording apparatus (specifically, for example, at least one of the recording control device and the power controlling device). Moreover, the above object of the present invention can be also achieved by a second computer program product in a computer-readable medium for tangibly embodying a program of instructions executable by a computer provided in the above-mentioned second recording apparatus of the present invention (including its various aspects), to make the computer function as at least one portion of the recording apparatus (specifically, for example, the overwrite controlling device).

According to each of the computer program products of the present invention, the above-mentioned firs or second recording apparatus of the present invention can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communication device. More specifically, the computer program product may include computer readable codes to cause the computer (or may comprise computer readable instructions for causing the computer) to function as the above-mentioned first or second recording apparatus of the present invention.

These effects and other advantages of the present invention will become more apparent from the following embodiments.

As explained above, the first recoding apparatus of the present invention is provided with the recording device, the recording control device, and the power controlling device. The first recoding method of the present invention is provided with the recording control process and the power controlling process. Moreover, the second recoding apparatus of the present invention is provided with the recording device and the overwrite controlling device. The second recoding method of the present invention is provided with the recording control process and the overwrite controlling process. Therefore, even if the recording area adjacent to the sector left as the unrecorded portion is overwritten with the predetermined overwrite information, it is possible to preferably perform subsequent data reading (particularly, reading of data normally recorded in the recording area left as the unrecorded portion).

### Brief Description of Drawings

[FIG. 1] FIG. 1 is a substantial plan view showing the basic structure of an optical disc in an embodiment.
[FIG. 2] FIG. 2 is a substantial cross sectional view showing the optical disc in the embodiment, and a corresponding conceptual view showing a recording area structure in the radial direction.
[FIG. 3] FIG. 3 is a block diagram conceptually showing the basic structure of a recording / reproducing apparatus in an embodiment.
[FIG. 4] FIG. 4 is a flowchart conceptually showing a flow of a first operation example of the recording / reproducing apparatus in the embodiment.
[FIG. 5] FIG. 5 is a schematic diagram conceptually showing an aspect of an OPC pattern.
[FIG. 6] FIG. 6 is a data structure diagram conceptually showing an aspect in which the OPC pattern is actually recorded.
[FIG. 7] FIGs. 7 are data structure diagrams conceptually showing one aspect of the recording of the data onto the optical disc in a finalize process.
[FIG. 8] FIGs. 8 are data structure diagrams conceptually showing another aspect of the recording of the data onto the optical disc in the finalize process.
[FIG. 9] FIGs. 9 are graphs conceptually showing the signal level of the reproduction signal of each of an OPC pattern recorded in the first operation example, the OPC pattern on which the overwrite data is overwritten, and an unrecorded portion with dummy data recorded, and the signal level of the reproduction signal of each of an OPC pattern recorded in a first comparison operation example, the OPC pattern on which the overwrite data is overwritten, and an unrecorded portion with dummy data recorded.
[FIG. 10] FIGs. 10 are waveform diagrams when observing, with a digital oscilloscope, the signal level of the reproduction signal of each of the OPC pattern recorded in the first comparison operation example, the OPC pattern on which the overwrite data is overwritten, and the unrecorded portion with dummy data recorded.
[FIG. 11] FIG. 11 is a flowchart conceptually showing a flow of a second operation example of the recording / reproducing apparatus in the embodiment.
[FIG. 12] FIG. 12 is a signal waveform diagram conceptually showing one specific example of the overwrite data set in the second operation example.
[FIG. 13] FIGs. 13 are graphs conceptually showing the signal level of the reproduction signal of each of an OPC pattern recorded in the second operation example, the OPC pattern on which the overwrite data is overwritten, and an unrecorded portion with dummy data recorded, and the signal level of the reproduction signal of each of an OPC pattern recorded in a second comparison operation example, the OPC pattern on which the overwrite data is overwritten, and an unrecorded portion with dummy data recorded.

### Description of Reference Codes

- 100: Optical disc
- 103a, 113a: IDTA
- 103b, 113b: ODTA
- 103c, 113c: flexible ODTA
- 109, 119: Fixed middle area
- 110, 120: Shifted middle area
- 200: Recording / reproducing apparatus
- 352: Optical pickup
- 353: Signal recording / reproducing device
- 354, 359: CPU
- 355, 360: Memory
- 361: OPC signal generation device
- 362: Overwrite signal generation device

### Best Mode for Carrying Out the Invention

Hereinafter, the best mode for carrying out the invention will be explained in each embodiment in order, with reference to the drawings.

### (Embodiment of Recording Medium)

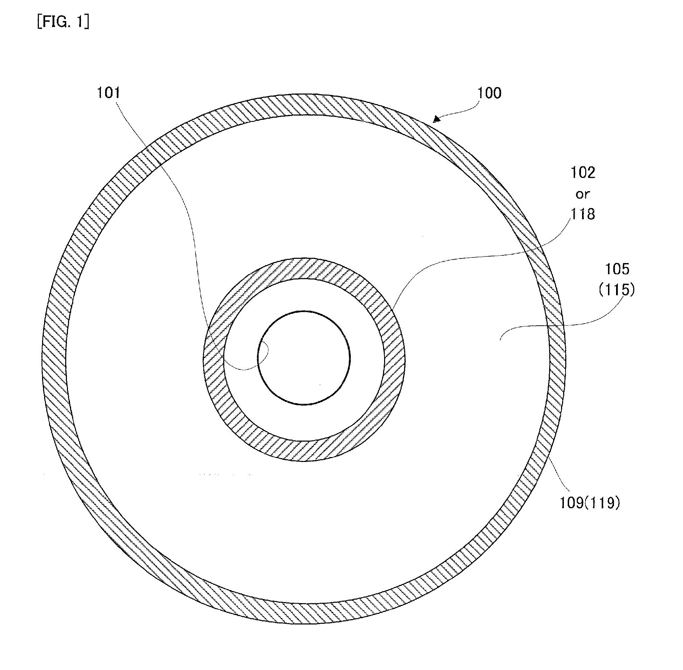

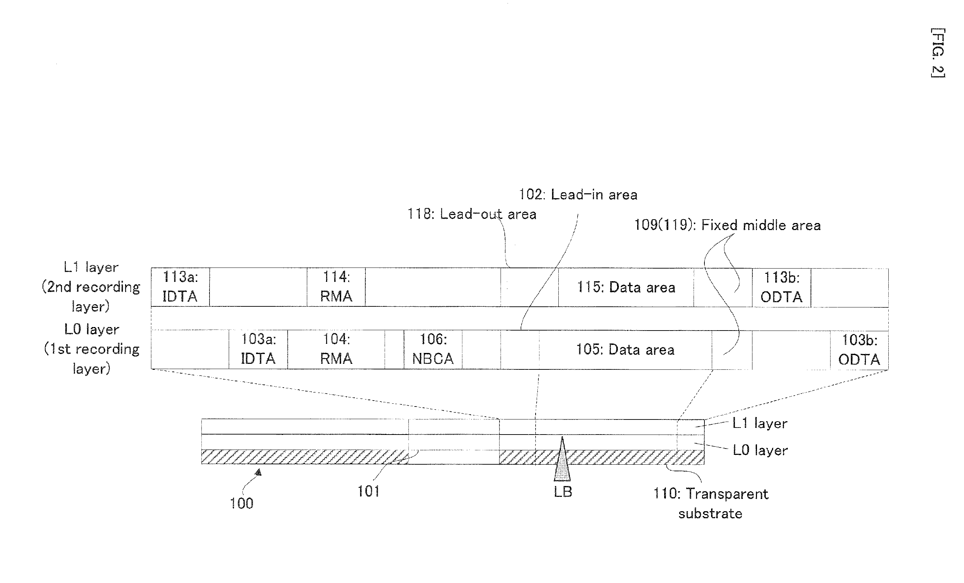

Firstly, with reference to FIG. 1 and FIG. 2, an explanation will be given for the basic structure of an optical disc as a recording medium onto which data is recorded by an embodiment of the recording apparatus of the present invention. FIG. 1 is a substantial plan view showing the basic structure of an optical disc 100 in the embodiment. FIG. 2 is a substantial cross sectional view showing the optical disc in the embodiment, and a corresponding conceptual view showing a recording area structure in the radial direction.

As shown in FIG. 1, the optical disc 100 has a recording surface on a disc main body with a diameter of about 12 cm, as is a DVD. On the recording surface, the optical disc 100 is provided with: a center hole 101 as being the center; a lead-in area 102 or a lead-out area 118; data areas 105 and 115; and fixed middle areas 109 and 119. Then, in the optical disc 100, recording layers or the like are laminated on a transparent substrate 110, for example. In each recording area of the recording layers, a track or tracks, such as groove tracks and land tracks, are alternately placed, spirally or concentrically, centered on the center hole 101. Moreover, on the track, data is divided and recorded by a unit of ECC block. The ECC block is a data management unit by which the record information can be error-corrected.

Incidentally, the present invention is not particularly limited to the optical disc having the three areas as described above. For example, even if the lead-in area 102, the lead-out area 118, or the fixed middle area 109 (119) does not exist, a data structure and the like explained below can be constructed. Moreover, as described later, the lead-in area 102 and the lead-out area 118 or the fixed middle area 109 (119) may be further segmentized.

Particularly, the optical disc 100 in the embodiment, as shown in FIG. 2, has such a structure that an L0 layer and an L1 layer are laminated on the transparent substrate 110. Upon the recording and reproduction of such a dual-layer type optical disc 100, the data recording / reproduction in the L0 layer or the L1 layer is performed, depending on which recording layer has the focus position of laser light LB, irradiated from the lower side to the upper side in FIG. 2. In particular, in the L0 layer, the data is recorded from the inner circumferential side to the outer circumferential side, whereas in the L1 layer, the data is recorded from the outer circumferential side to the inner circumferential side. In other words, the optical disc 100 in the embodiment corresponds to an optical disc in an opposite track path method. Even an optical disc in a parallel track path method can also receive various benefits described later, by adopting a structure discussed below.

The optical disc 100 in the embodiment is provided with: IDTA (Inner Disc Testing Area) 103a (113a), RMA (Recording Management Area) 104 (114), and NBCA (Narrow Burst Cutting Area) 106 on the inner circumferential side of the lead-in area 102 and the lead-out area 118; and ODTA (Outer Disc Testing Areas) 103b (113b) on the outer circumferential side of the fixed middle areas 109 (119).

The IDTA 103a (113a) and the ODTA 103b (113b) are recording areas to perform therein an OPC (Optimum Power Control) process for adjusting (calibrating) the laser power of the laser light LB when the data is recorded onto the optical disc 100. With a stepwise change in the laser power, an OPC pattern is recorded into the IDTA 103a (113a) or the ODTA 103b (113b), and the reproduction quality (e.g. asymmetry, etc.) of the recorded OPC pattern is measured, to thereby calibrate an optimum laser power (optimum recording laser power) when the data is recorded. In particular, the optimum laser power when the data is recorded into the recording area on the relatively inner circumferential side of the optical disc 100, is preferably calculated by recording the OPC pattern into the IDTA 103a (113a). Moreover, the optimum laser power when the data is recorded into the recording area on the relatively outer circumferential side of the optical disc 100, is preferably calculated by recording the OPC pattern into the ODTA 103b (113b).

Then, in order to preferably perform the OPC process without any influence of another recording layer, when the OPC process is performed by using the IDTA 113a or the ODTA 113b in the L1 layer, the OPC pattern is recorded by irradiating the laser light LB through the L0 layer in which the data is unrecorded. Of course, the same is true in the IDTA 103a or the ODTA 103b in the L0 layer. Thus, the IDTA 103a in the L0 layer and the IDTA 113a in the L1 layer are preferably not located in overlap positions, viewed from the irradiation side of the laser light LB. In the same manner, the ODTA 103b in the L0 layer and the ODTA 113b in the L1 layer are preferably not located in overlap positions, viewed from the irradiation side of the laser light LB.

However, particularly in the recording area in which the normal data is recorded, such as the data area 105 (115), of the optical disc 100, the data is recorded into the data area 115 in the L1 layer after the data is recorded into the data area 105 in the L0 layer, as a general rule. Namely, by irradiating the laser light LB through the data area 105 in the L0 layer in which the data is recorded, the data is recorded into the data area 115 in the layer. The same is basically true in the other recording areas.

The RMA 104 (114) is a recording area to record therein various management information for managing the recording of data onto the optical disc 100. Specifically, such management information is recorded that indicates the arrangement or recording state or the like of the data recorded on the optical disc 100.

The NBCA 106 has various identification data recorded to identify the optical disc 100, including a manufacturer's number of the optical disc 100, for example. In particular, the various identification data is recorded in a bar-code shaped cutting pattern formed by the laser light on the recording surface of the optical disc 100.

Incidentally, in the embodiment below, an explanation is given by using the optical disc 100 of a two-layer single sided type; however, it is not limited to this as the optical disc. Namely, it is not limited to the dual-layer type optical disc, and it may be an optical disc of a two-layer double sided type, i.e. dual layer double sided type. Moreover, it is not limited to the optical disc having two recording layers, as described above, and it may be an optical disc of a multilayer type with three or more layers. Moreover, it may be an optical disc of a single layer type with a single recording layer.

### (Embodiment of Recording / Reproducing Apparatus)

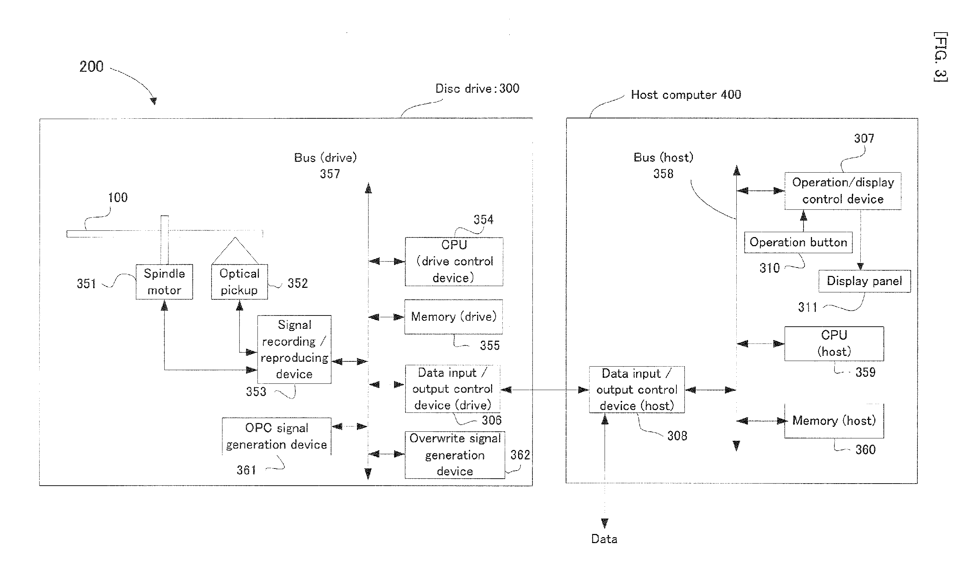

Next, with reference to FIG. 3 to FIGs. 13, the structure and operation of a recording / reproducing apparatus 200, as being an embodiment according to the recording apparatus of the present invention, will be explained.

### (1) Basic Structure

Firstly, with reference to FIG. 3, the basic structure of the recording / reproducing apparatus 200 will be discussed. FIG. 3 is a block diagram conceptually showing the basic structure of the recording / reproducing apparatus 200 in the embodiment. Incidentally, the recording / reproducing apparatus 200 has a function of recording the data onto the optical disc 100 and a function of reproducing the data recorded on the optical disc 100.

As shown in FIG. 3, the recording / reproducing apparatus 200 is provided with: a disc drive 300 into which the optical disc 100 is actually loaded and in which the data is recorded and reproduced; and a host computer 400, such as a personal computer, for controlling the recording and reproduction of the data with respect to the disc drive 300.

The disc drive 300 is provided with: the optical disc 100; a spindle motor 351; an optical pickup 352; a signal recording / reproducing device 353; a CPU (drive control device) 354; a memory 355; an OPC signal generation device 361; an overwrite signal generation device 362; a data input / output control device 306; and a bus 357. Moreover, the host computer 400 is provided with: a CPU 359; a memory 360; an operation / display control device 307; an operation button 310; a display panel 311; and a data input / output control device 308.

The spindle motor 351 is intended to rotate and stop the optical disc 100, and operates upon accessing the optical disc. More specifically, the spindle motor 351 is constructed to rotate the optical disc 100 at a predetermined speed and stop it, under spindle servo from a not-illustrated servo unit or the like.

The optical pickup 352 constitutes one specific example of the "recording device" of the present invention and is provided with a semiconductor laser device, a lens, and the like, to perform the recording / reproduction with respect to the optical disc 100. More specifically, the optical pickup 352 irradiates the optical disc 100 with a light beam, such as a laser beam, as reading light with a first power upon reproduction, and as writing light with a second power upon recording, with it modulated.

The signal recording / reproducing device 353 controls the spindle motor 351 and the optical pickup 352, to thereby perform the recording / reproduction with respect to the optical disc 100. More specifically, the signal recording / reproducing device 353 is provided with: a laser diode (LD) driver; a head amplifier; and the like, for example. The laser diode driver (LD driver) drives a not-illustrated semiconductor laser device located in the optical pickup 352. The head amplifier amplifies the output signal of the optical pickup 352, i.e. the reflective light of a light beam, and outputs the amplified signal. More specifically, the signal recording / reproducing device 353 drives the not-illustrated semiconductor laser device located in the optical pickup 352, in order to determine an optimum laser power by the recording and reproduction processes for the OPC pattern, together with a not-illustrated timing generator or the like, under the CPU 354, upon the OPC process.

The memory 355 is used in the general data processing and the OPC process or the like on the disc drive 300, including a buffer area for the record / reproduction data, an area used as an intermediate buffer when data is converted into the data that can be used on the signal recording / reproducing device 353, and the like. Moreover, the memory 355 is provided with: a ROM area into which a program for performing an operation as a recording device, i.e. firmware, is stored; a buffer for temporary storage of the record / reproduction data; a RAM area into which a parameter required for the operation of a firmware program or the like is stored; and the like.

The CPU (drive control device) 354 is connected to the signal recording / reproducing device 353 and the memory 355 through the bus 357, and controls the entire disc drive 300 by giving an instruction to various controlling devices. Normally, software or firmware for operating the CPU 354 is stored in the memory 355.

The OPC signal generation device 361 constitutes one specific example of the "power controlling device" of the present invention, and generates the OPC pattern which is recorded into the IDTA 103a (113a) or the ODTA 103b (113b) in the OPC process. The signal recording / reproducing device 353 generates a driving pulse based on the OPC pattern generated by the OPC signal generation device 361, and drives the not-illustrated semiconductor laser located in the optical pickup 352.

The overwrite signal generation device 362 constitutes one specific example of the "overwrite controlling device" of the present invention, and generates overwrite data which will be recorded into the recording area including the fixed middle area 109 (119) or the like.

The data input / output control device 306 controls the input / output of the data from the exterior with respect to the disc drive 300, to thereby perform storage to and export from the data buffer on the memory 355. A drive control command issued from the external host computer 400 connected to the disc drive 300 through an interface, such as a SCSI and an ATAPI, is transmitted to the CPU 354 through the data input / output control device 306. Moreover, the record / reproduction data is also exchanged with the host computer 400 through the data input / output control device 306, in the same manner.

The operation / display control device 307 receives an operation instruction and performs display with respect to the host computer 400, and transmits an instruction by the operation button 310, such as an instruction to record or reproduce, to the CPU 359. The CPU 359 may transmit a control command to the disc drive 300, through the data input / output control device 308, on the basis of instruction information from the operation / display control device 307, to thereby control the entire disc drive 300. In the same manner, the CPU 359 can transmit a command for requesting the disc drive 300 to transmit an operational state to the host, with respect to the disc drive 300. By this, the operational state of the disc drive 300, such as during recording and during reproduction, can be recognized, so that the CPU 359 can output the operational state of the disc drive 300 to the display panel 310, such as a fluorescent tube and an LCD, through the operation / display control device 307.

The memory 360 is an inner storage apparatus used by the host computer 400, and is provided with: a ROM area into which a firmware program, such as a BIOS (Basic Input / Output System), is stored; a RAM area into which a parameter required for the operation of an operating system and an application program or the like is stored; and the like. Moreover, the memory 360 may be connected to a not-illustrated external storage apparatus, such as a hard disk, through the data input / output control device 308.

One specific example used by combining the disc drive 300 and the host computer 400, as explained above, is household equipment, such as recorder equipment for recording and reproducing video images. The recorder equipment records a video signal from a broadcast reception tuner and an external connection terminal, onto a disc, and outputs the video signal reproduced from the disc to external display equipment, such as a television. The operation as the recorder equipment is performed by executing a program stored in the memory 360, on the CPU 359. Moreover, in another specific example, the disc drive 300 is a disc drive (hereinafter referred to as a "drive", as occasion demands), and the host computer 400 is a personal computer and a work station. The host computer, such as the personal computer, and the drive are connected through the data input / output control devices 306 and 308, such as the SCSI and the ATAPI, and application, such as writing software, installed in the host computer 400 controls the disc drive 300.

### (2) Operation Principle

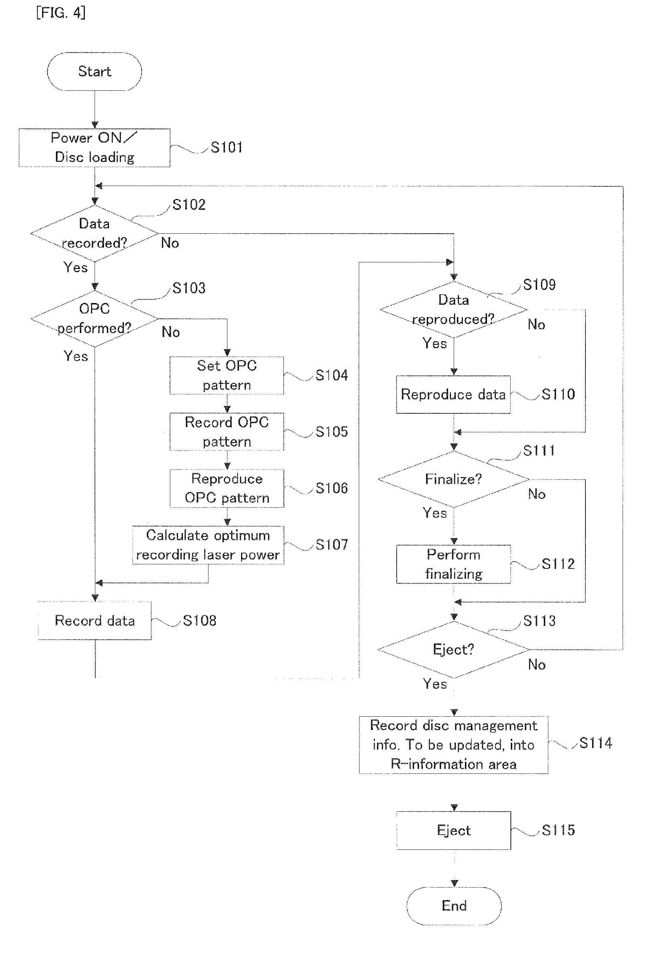

Next, with reference to FIG. 4 to FIGs. 13, the operation principle of the recording / reproducing apparatus 200 in the embodiment will be discussed.

### (2-1) First Operation Example

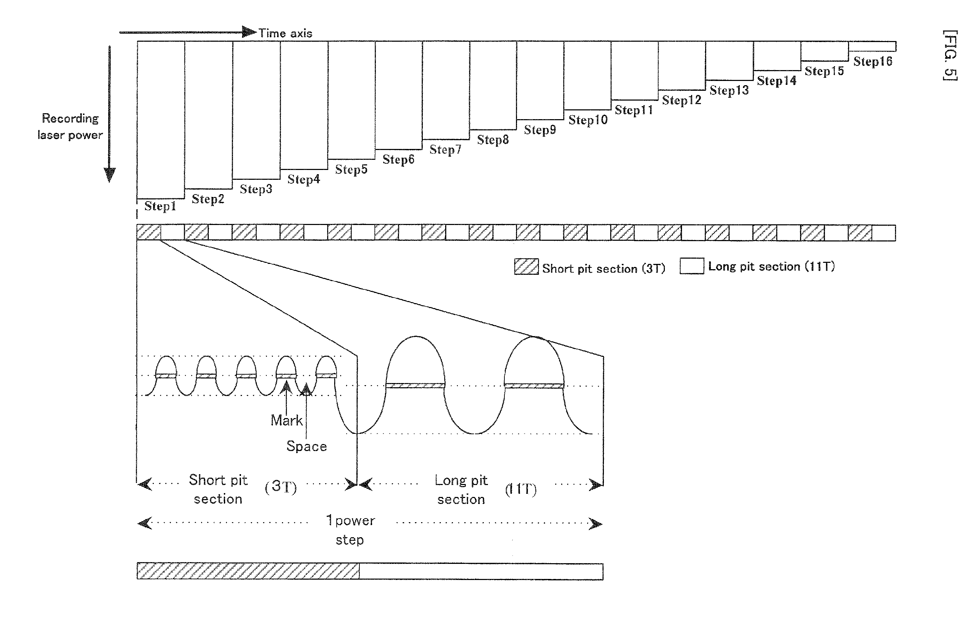

Firstly, with reference to FIG. 4 to FIGs. 10, an explanation will be given for a first operation example, as the operation principle of the recording / reproducing apparatus 200 in the embodiment. Here, the overall outline of the first operation example will be explained by using FIG. 4, and supplementary or more detailed explanation will be given by using FIG. 5 to FIGs. 10. FIG. 4 is a flowchart conceptually showing a flow of the first operation example of the recording / reproducing apparatus 200 in the embodiment.

As shown in FIG. 4, firstly, the power supply of the recording / reproducing apparatus 200 is changed to ON, and then, the optical disc 100 is loaded onto the disc drive 300 (step S101). After this loading, various control data or management data necessary for the data recording and reproduction or the like may be read. After that, it is judged whether or not the data is recorded onto the loaded optical disc 100 (step S102). For example, if a user gives an instruction to record the data by using an external remote controller, it may be judged that the data is recorded.

As a result of the judgment of the step S102, if it is judged that the data is not recorded (the step S102: No), the operational flow goes to a step S109. On the other hand, if it is judged that the data is recorded (the step S102: Yes), then, it is judged whether or not the OPC process is already performed (step S103).

As a result of the judgment of the step S103, if it is judged that the OPC process is already performed (the step S103: Yes), the data is recorded onto the optical disc 100 while the laser light LB is irradiated with the optimum recording laser power calculated by the OPC process already performed (step S108).

On the other hand, if it is judged that the OPC process is not performed yet (the step S103: No), the OPC process is performed. Specifically, firstly, a test signal (i.e. OPC pattern) is generated by the operation of the OPC signal generation device 361 controlled by the CPU 354 (step S104). Then, on the basis of the OPC pattern generated by the operation of the OPC signal generation device 361, the signal recording / reproducing device 353 generates the driving pulse for irradiation of the laser light LB, and supplies it to the optical pickup 352. As result, the laser light LB is irradiated from the optical pickup 352, and the OPC pattern generated by the operation of the OPC signal generation device 361 is recorded into the IDTA 103a (113a) or the ODTA 103b (113b) of the optical disc 100 (step S105).

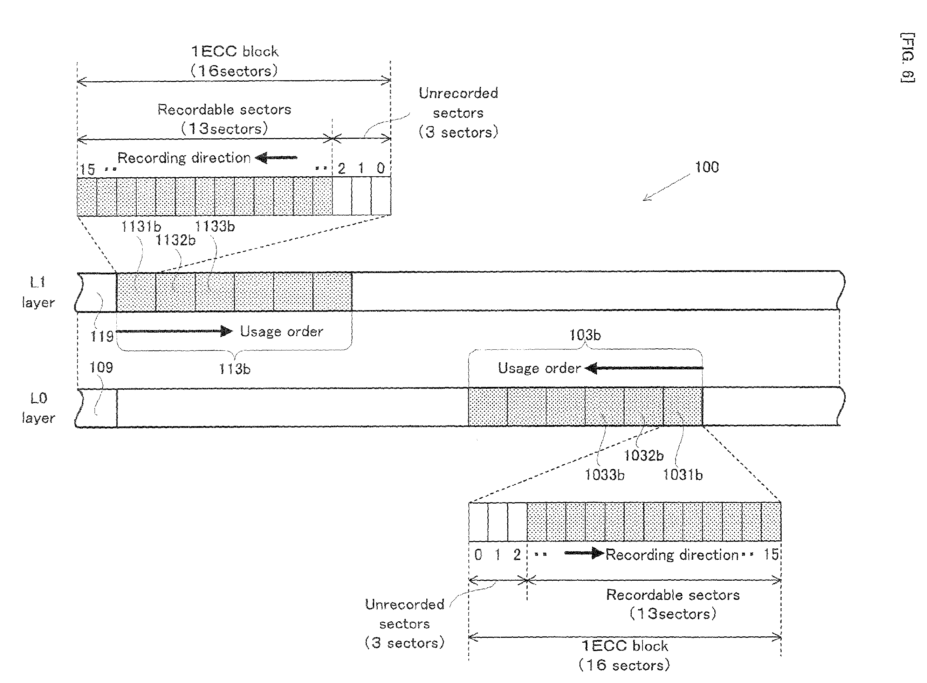

A more detailed explanation will be given to the recording of the OPC pattern, with reference to FIG. 5 and FIG. 6. FIG. 5 is a schematic diagram conceptually showing an aspect of the OPC pattern. FIG. 6 is a data structure diagram conceptually showing an aspect in which the OPC pattern is actually recorded.

As shown in FIG. 5, the OPC signal generation device 361 generates a recording pattern in which each of a short pit (mark) corresponding to a 3T pulse and a long pit (mark) corresponding to an 11T pulse is formed alternately with an unrecorded section (space) which has the same length as that of the corresponding pit (mark), for example. Then, the OPC pattern is generated by relating such a recording pattern to each of the recording laser powers changed at 16 steps. Hereinafter, a unit of combination (i.e. the recording pattern shown in the center of FIG. 5) of the short pit (3T mark) corresponding to the 3T pulse and the long pit (11T space) corresponding to the 11T pulse, which is recorded with a signal recording laser power, is referred to as an "OPC basic pattern", as occasion demands. Then, the entire recording pattern recorded in one OPC process even including an aspect of changing the recoding laser power is referred to as an "OPC pattern (test signal)", as occasion demands.

Particularly in the embodiment, firstly, the OPC basic pattern is recorded with the strongest (or highest or largest) recording laser power (the recording laser power corresponding to Step 1 in FIG. 5), and afterward, the OPC basic recording pattern is recorded with the recording laser power subsequently changed to be lower (i.e. subsequently changed to the recording laser powers corresponding to Step 2, Step 3, ..., Step 16 in FIG. 5). More specifically explaining this, firstly, the OPC basic pattern is recorded with the recording laser power corresponding to Step 1. After the recording of the OPC basic pattern with the recording laser power corresponding to Step 1, the OPC basic pattern is recorded with the recording laser power corresponding to Step 2 having a power value weaker (or lower or smaller) than that of the recording laser power corresponding to Step 1. Then, the recording laser power in recording the OPC basic pattern is subsequently reduced. At the end, the OPC basic pattern is recorded with the recording laser power corresponding to Step 16 having the weakest power value than any of the previous recording laser powers corresponding to Step 1 to Step 15. The specification of the OPC pattern even including the aspect of changing the recording laser power is performed by the operation of the OPC signal generation device 361. Namely, the recording laser power of the laser light LB is changed by the LD driver included in the signal recording / reproducing device 353; however, the change of the recoding laser power of the laser light LB in the OPC process is actually controlled by the OPC signal generation device 361 (by using the OPC pattern generated by the OPC signal generation device 361).

As shown in FIG. 6, if in the L0 layer, such an OPC pattern is recorded from a recording area portion on the outer circumferential side of the ODTA 103b in order. For example, firstly, the OPC pattern is recorded into a partial recording area portion 1031b of the ODTA 103b, and then the OPC pattern is recorded into recording area portions 1032b and 1033b located on the inner circumferential side in order. The size of each recording area portion is, for example, one ECC block. In the recording area portion, the OPC pattern is recorded from the inner circumferential side to the outer circumferential side in order, as in the data recording direction of the data area 105. On the other hand, in the L1 layer, the OPC pattern is recorded from a recording area portion on the inner circumferential side of the ODTA 113b in order. For example, firstly, the OPC pattern is recorded into a partial recording area portion 1131b of the ODTA 113b, and then the OPC pattern is recorded into recording area portions 1132b and 1133b located on the outer circumferential side in order. In the recording area portion, the OPC pattern is recorded from the outer circumferential side to the inner circumferential side in order, as in the data recording direction of the data area 115.

Out of each recoding area portion of the ODTA 103b (113b), the first three sectors are left unrecorded without the OPC pattern recorded. Namely, the zero sector to the second sector in each receding area portion are left unrecorded, and the OPC pattern is recorded into the third sector to the 15th sector, to thereby perform the OPC process. The reason is as follows.

The dummy data (e.g. "00h" data, etc.) is recorded into he fixed middle area 109 (119) adjacent to or close to the ODTA 103b (113b) in a finalize process, or the predetermined overwrite data (e.g. "00h" data, etc. in the first operation example) is overwritten, in order to provide reproduction compatibility with the read-only drive of the optical disc. At this time, in order to preferably prevent the runaway of the operation caused by the optical pickup 351 running into an unrecorded portion where the data is not recorded, with the dummy data or the overwrite data needs to be recorded into a larger range than the fixed middle area 109 (119). Thus, the overwrite data is overwritten even on the ODTA 103b (113b) where the OPC pattern is recorded. From the viewpoint of securing the operation stability of the recording / reproducing apparatus 200 (or the read-only drive) even after the recording of the dummy data or the overwriting of the overwrite data, it is preferable that at least the sector ID can be read in the recording area portion into which the dummy data is recorded or the overwrite data is overwritten. However, if the overwrite data is further overwritten into the recording area portion with the OPC pattern recorded, recording pits on the optical disc 100 become dark (i.e. reflectance becomes lower), and as a result, there is a possibility that the data cannot be read. Thus, at least the three sectors in each recording area portion of the ODTA 103b (113b) are left unrecorded without the OPC pattern recorded. This is how the sector ID of the three sectors can be read even after the recording of the dummy data or the overwriting of the overwrite data.

In FIG. 4 again, next, the OPC pattern recorded in the step S105 is reproduced (step S106). Then, on the basis of the OPC pattern reproduced in the step S106, the optimum recording laser power when the data is recorded is calculated (step S107). More specifically, the peak value and the bottom value of envelope detection of a RF signal are sampled from the RF signal, wherein the RF signal is a reproduction signal of the OPC pattern inputted to a not-illustrated envelope detector. Then, from the peak value and the bottom value, asymmetry is calculated which is the reproduction quality of the OPC pattern. The reproduction of the OPC pattern (specifically, one pair of the 3T mark and the 11T space) and the measurement of the asymmetry are performed in one OPC process in accordance with the number of times of recording the record pattern (i.e. the number of the recording laser powers changed), for example. By this, it is possible to obtain a correlation between the recording laser power and the asymmetry. Then, on the basis of the correlation, the recording laser power which realizes the target asymmetry (i.e. in which the asymmetry is "0") is calculated as the optimum recording laser power.

Then, under the control of the CPU 354, which constitutes one specific example of the "recording control device" of the present invention, the various data is recorded into the data area 105 (115) while the laser light is irradiated with the optimum recording laser power calculated in the step S107 (step S108).

Then, it is judged whether or not the data recorded on the optical disc 100 is reproduced (step S109). For example, if a user gives an instruction to reproduce the data by using an external remote control, it may be judged that that the data is reproduced.

As a result of the judgment, if it is judged that the data is reproduced (the step S109: Yes), the data recorded on the optical disc 100 is read by irradiating the optical disc 100 with the laser light LB with a reproduction laser power, and after a signal process such as a demodulation process and a decoding process is performed, the data is reproduced in video images, audio, or other various formats (step S110). On the other hand, if it is judged that the data is not reproduced (the step S109: No), the data is not reproduced.

Then, it is judged whether or not the finalize process is performed (step S111). Namely, it is judged whether or not the data for the finalize process is recorded into the lead-in area 102, the lead-out area 118 and the fixed middle area 109 (119) such that the data newly recorded on the optical disc 100 can be reproduced even by the read-only drive.

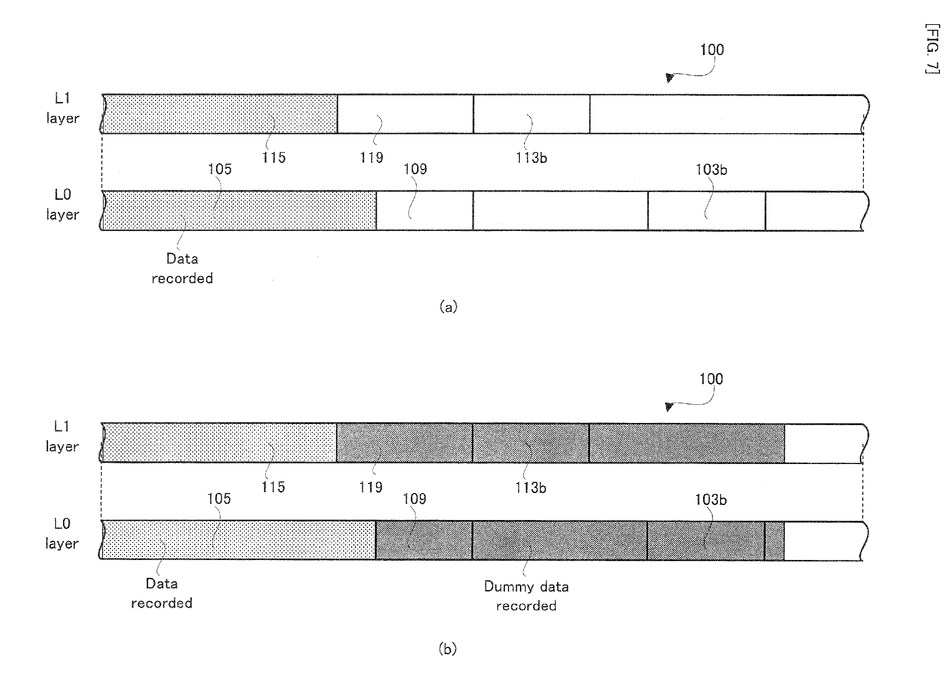

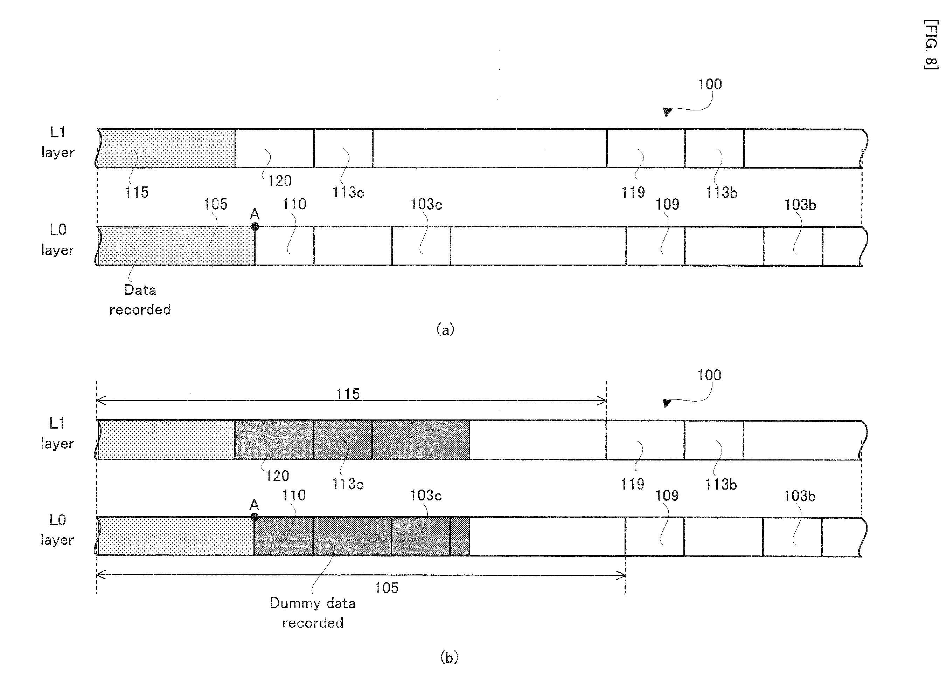

As a result of the judgment, if it is judged that the finalize process is performed (the step S111: Yes), the finalize process is performed on the optical disc 100. On the other hand, if it is judged that the finalize process is not performed (the step S111: No), the finalize process is not performed on the optical disc 100. Out of the finalize process, the recording operation of recording the data for the finalize process into the fixed middle area 109 (119) will be explained in more detail, with reference to FIGs. 7 and FIGs. 8. FIGs. 7 and FIGs. 8 are data structure diagrams conceptually showing an aspect of the recording of the data onto the optical disc 100 in the finalize process.

As shown in FIG. 7(a), the finalize process is performed after the data is recorded into the data area 105 (115). Incidentally, here, a hatching portion indicates a recording area in which predetermined data is recorded.

At this time, as described above, not only the dummy data is merely recorded into the fixed middle area 109 (119), but also the dummy data is recorded or the overwrite data is overwritten into the recording area on the further outer circumferential side of the fixed middle area 109 (119) . Specifically, as shown in FIG. 7(b), the dummy data is also recorded or the overwrite data is also overwritten into the recording area on the further outer circumferential side including the ODTA 103b (113b) in addition to the fixed middle area 109 (119). At this time, it is preferable that the edge portion on the inner circumferential side of the recording area in the L0 layer, into which the dummy data is recorded or the overwrite data is overwritten, is about 0.4 mm or more away, in the radial direction, from the edge portion on the outer circumferential side of the recording area in the L1 layer into which the dummy data is recorded or the overwrite data is overwritten. The recording of the dummy data or the overwriting of the overwrite data, as described above, results in the formation of a middle area on the outer circumferential side of the data area 105 (115), to thereby ensure the operation stability.

Moreover, the finalize process is not necessarily performed after the data is recorded into the entire data area 105 (115). For example, as shown in FIG. 8(a), the finalize process may be performed even if the data is recorded into the data area 115 by return after the data is recorded up to the middle of the data area 105 (e.g. with a point A as the end edge). At this time, a shifted middle area 110 (120) is formed to be adjacent to the edge portion on the outer circumferential side of the recording area in which the data is already recorded, out of the data area 105 (115), when the data is recorded into the data area 115 by return. Moreover, a flexible ODTA 103c (113c) is formed on the further outer circumferential side of the shifted middle area 110 (120). A relationship between the shifted middle area 110 (120) and the flexible ODTA 103c (113c) is substantially the same as the relationship between the fixed middle area 109 (119) and the ODTA 103b (113b) described above.

After that, when the finalize process is performed, as shown in FIG. 8(b), the dummy data is also recorded or the overwrite data is also overwritten into the recording area on the further outer circumferential side including the flexible ODTA 103c (113c) in addition to the shifted middle area 110 (120). Even by this, it is possible to ensure the operation stability, as in the case of FIG. 7(b).

In FIG. 4 again, after the finalize process in the step S111, it is judged whether or not the optical disc 100 is ejected from the disc drive 300 (step S113). For example, if a user gives an instruction to eject the optical disc 100 by using an external remote controller, it may be judged that the data is recorded.

As a result of the judgment, if it is judged that the optical disc 100 is ejected (the step S113: Yes), disc management information to be updated is recorded into an R-information area in the lead-in area 102 (step S114). After that, the optical disc 100 is ejected from the disc drive 300 (step S115). On the other hand, if it is judged that the optical disc 100 is not ejected (the step S113: No), the operational flow returns to the step S102 again, and the above-mentioned operations are repeated, as occasion demands.

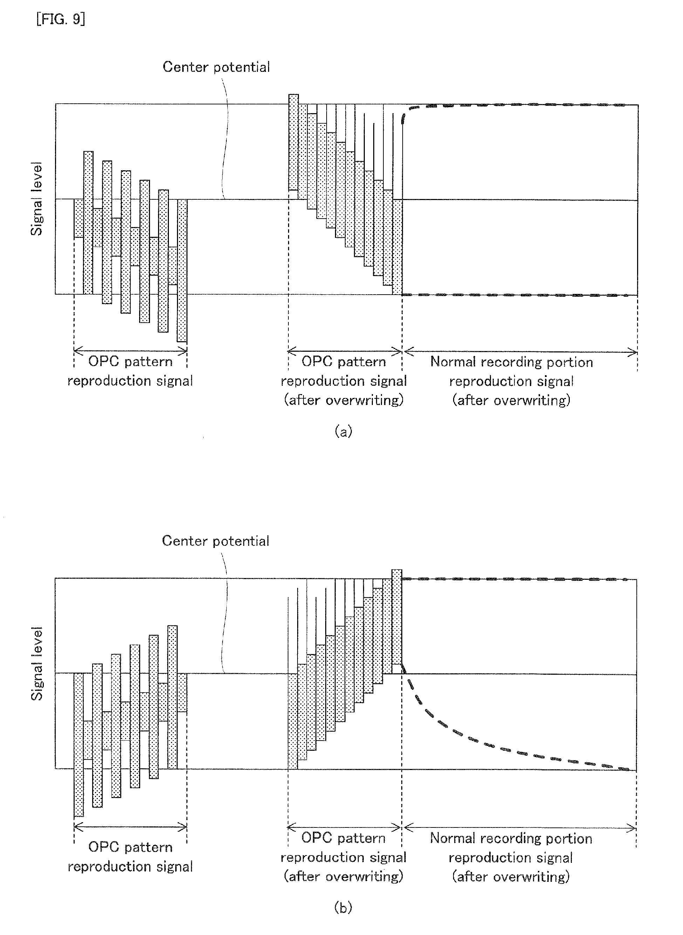

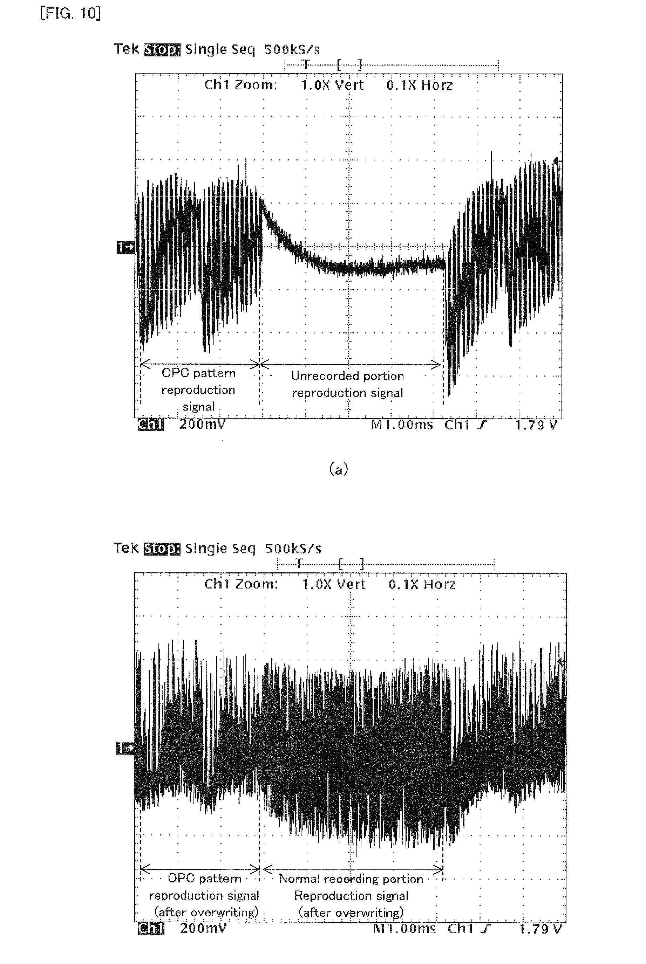

As explained above, according to the first operation example, when the OPC pattern is recorded into the ODTA 103b (113b), firstly, the OPC basic pattern is recorded with the strongest recording laser power, and afterward, the OPC basic pattern is recorded with the recording laser power subsequently changed to be weaker. In other words, the OPC basic pattern recorded in the end of one OPC process (or the OPC basic pattern which is recorded in a position adjacent to an unrecorded portion of a recording area portion next to the recording area portion of the ODTA 103b (113b) where the OPC basic pattern is currently recorded) is recorded by using the laser light LB irradiated with the weakest recording laser power in the OPC process. The benefits which can be received by adopting such configuration will be explained with reference to FIGs. 9 and FIGs. 10. FIGS. 9 are graphs conceptually showing the signal level of the reproduction signal of each of the OPC pattern recorded in the first operation example, the OPC pattern overwritten with overwrite data, and an unrecorded portion with dummy data recorded, and the signal level of the reproduction signal of each of the OPC pattern recorded in a first comparison operation example, the OPC pattern overwritten with overwrite data, and an unrecorded portion with dummy data recorded. FIGs. 10 are waveform diagrams when observing, with a digital oscilloscope, the signal level of the reproduction signal of each of the OPC pattern recorded in the first comparison operation example, the OPC pattern overwritten with overwrite data, and the unrecorded portion with dummy data recorded.

The reproduction signal obtained by reproducing the OPC pattern before the overwriting of the overwrite data is shown on the left side of FIG. 9(a). The reproduction signal corresponding to the 3T mark and the 11T space appears repeatedly. Moreover, the signal level gradually decreases, as in the recording laser power when the OPC pattern is recorded.

The reproduction signal obtained by the reproducing the OPC pattern after the overwriting of the overwrite data is shown in the center of FIG. 9(a). The recording pits formed by the overwriting of the overwrite data and the recording pits formed by the recording of the OPC pattern interfere, and the entire reproduction signal is obtained as a reproduction signal darker than before the overwriting of the overwrite data. In other words, the signal level of the reproduction signal of the OPC pattern after the overwriting of the overwrite data is higher than the signal level of the reproduction signal of the OPC pattern before the overwriting of the overwrite data, on the basis of a center potential.

The reproduction signal obtained by reproducing the unrecorded portion (i.e. the first three sectors in each recording area portion of the ODTA 103b (113b)) after the dummy data is recorded (i.e. the reproduction signal obtained by reproducing a normal recording portion where the dummy data is normally recorded) is shown on the right side of FIG. 9(a). The signal level of the reproduction signal has substantially the same level as the center potential. This is because the OPC basic pattern recorded in the end of one OPC process is recorded with relatively the weakest recording laser power, so that it is possible to reduce an influence, caused by the overwriting of the overwrite data, on the reproduction quality of the reproduction signal in the normal recording portion. Namely, it is because the signal level of the reproduction signal obtained by reproducing the OPC basic pattern recorded in the end is not disproportionately distributed, compared to the center potential, and it is smoothly connected to the reproduction signal obtained by reproducing the normal recording portion.

On the other hand, an explanation will be given for the reproduction signals of the unrecorded portion and the OPC pattern in the first comparison operation example in which the OPC basic pattern is firstly recorded with the weakest recording laser power, and afterward, the OPC basic pattern is recorded with the recording laser power subsequently changed to be stronger. Incidentally, such an aspect of recording the OPC pattern is mainly adopted on a traditional recording apparatus.

The reproduction signal obtained by reproducing the OPC pattern before the overwriting of the overwrite data is shown on the left side of FIG. 9(b). The reproduction signal corresponding to the 3T mark and the 11T space appears repeatedly. Moreover, the signal level gradually increases, as in the recording laser power when the OPC pattern is recorded.

The reproduction signal obtained by the reproducing the OPC pattern after the overwriting of the overwrite data is shown in the center of FIG. 9(b). The recording pits formed by the overwriting of the overwrite data and the recording pits formed by the recording of the OPC pattern interfere, and the entire reproduction signal is obtained as a reproduction signal darker than before the overwriting of the overwrite data. In other words, the signal level of the reproduction signal of the OPC pattern after the overwriting of the overwrite data is higher than before the overwriting of the overwrite data, on the basis of the center potential.

The reproduction signal obtained by reproducing the unrecorded portion (i.e. the first three sectors in each recording area portion of the ODTA 103b (113b)) after the dummy data is recorded (i.e. the reproduction signal obtained by reproducing a normal recording portion where the dummy data is normally recorded) is shown on the right side of FIG. 9(b). The signal level of the reproduction signal is higher than the center potential. This is because the OPC basic pattern recorded in the end of one OPC process is recorded with the strongest recording laser power, so that the influence on the reproduction quality of the reproduction signal in the normal recording portion increases. Namely, it is because the signal level of the reproduction signal obtained by reproducing the OPC basic pattern recorded in the end is distributed one-sided to a high level, compared to the center potential, so that it cannot be smoothly connected to the reproduction signal obtained by reproducing the normal recording portion. Thus, it is hardly possible to preferably read the reproduction signal obtained by reproducing the normal recording portion, and as a result, it is hardly possible to read the sector ID of the first three sectors in each recording area portion of the ODTA 103b (113b).

Moreover, in observing, with an actual digital oscilloscope, the reproduction signal of the OPC pattern or the like recorded in the first comparison operation example, the signal waveforms shown in FIGs. 10 can be obtained. FIG. 10(a) shows the reproduction signal obtained by reproducing the unrecorded portion before the recording of the dummy data and the OPC pattern before the overwriting of the overwrite data. As shown in FIG. 10(a), before the overwriting of the overwrite data, the reproduction signal obtained by reproducing the unrecorded portion (wherein the "reproduction" corresponds to so-called "trace") is a reproduction signal at a level near the center potential, because the data is not recorded. However, in the start portion of the reproduction signal obtained by reproducing the unrecorded portion, it is a reproduction signal at a level higher than the center potential because of an influence of the reproduction signal of the OPC pattern.

On the other hand, FIG. 10(b) shows the reproduction signal obtained by reproducing the unrecorded portion after the recording of the dummy data and the OPC pattern after the overwriting of the overwrite data. As shown in FIG. 10(b), after the overwriting of the overwrite data, the reproduction signal obtained by reproducing the unrecorded portion where the dummy data is recorded (the normal recording portion) is influenced by the reproduction signal obtained by reproducing the OPC pattern overwritten with the overwrite data, and it does not have a waveform that allows the sector ID or the like to be preferably read.

Incidentally, FIG. 10(a) and FIG. 10(b) merely explain the reproduction signal schematically shown by FIG. 9(b) as the waveform observed with the actual digital oscilloscope. Thus, it will be understood that the phenomena in FIG. 10(a) and FIG. 10(b) can be explained for the same reasons as those of the explanation in FIG. 9(b).

As described above, according to the first comparison operation example, it is hardly possible to read the sector ID of the first three sectors in each recording area portion of the ODTA 103b (113b), which are left unrecorded on purpose. However, according to the first operation example, it is possible to minimize the influence on the unrecorded portion by the overwriting of the overwrite data into the OPC pattern. By this, it is possible to preferably read the sector ID of the first three sectors in each recording area portion of the ODTA 103b (113b), and it is possible to secure the operation stability of the recording / reproducing apparatus 200 (or the read-only drive).

Incidentally, in FIG. 5, the recording laser power is subsequently changed to be weaker in the OPC process. However, in receiving the above-mentioned benefits, it is not limited to this changing aspect. In short, as long as the recording laser power in recording the OPC basic pattern recorded in the end of one OPC process is smaller than the other recording laser powers, then, the above-mentioned various benefits can be received. Namely, as long as the recording laser power in recording the OPC basic pattern recorded in the end of one OPC process is smaller than the other recording laser powers, then, the value of the recording laser power is arbitrary when the OPC basic pattern is recorded except the OPC basic pattern recorded in the end. However, from the viewpoint of further inhibiting the influence on the unrecorded portion by the overwriting of the overwrite data into the OPC pattern, as shown in FIG. 5, it is preferable to subsequently change the recording laser power to be weaker.

Moreover, in the explanation on the first operation example, the operation of recording the OPC pattern into the ODTA 103b (113b) is explained. However, it is not limited to this, and the data may be recorded in accordance with the operation explained in the first operation example even when the data is recorded into the other recording areas. For example, in the case where the data is recorded while preparing an unrecorded portion and the overwrite data is recorded on a recording area adjacent to the unrecorded portion, it is preferable to record the data such that the recording laser power is relatively weak or the weakest when the data is recorded into the recording area adjacent to the unrecorded portion (e.g. the recording area expressed by a unit, such as the sector, ECC block, or the like). Alternatively, in the case where the data is recorded into a recording area including an unrecorded area while preparing the unrecorded area and the overwrite data is recorded on a recording area adjacent to the edge on the inner circumferential side of the unrecorded portion, it is preferable to record the data such that the recording laser power in recording the data onto the edge on the outer circumferential side of the recording area adjacent to the edge on the inner circumferential side of the unrecorded portion is relatively weak or the weakest, compared to the recording laser power in recording the data into an area portion other than the edge on the outer circumferential side of the recording area adjacent to the edge on the inner circumferential side of the unrecorded portion. Alternatively, in the case where the data is recorded into a recording area including an unrecorded portion while preparing the unrecorded portion and the overwrite data is recorded on a recording area adjacent to the edge on the outer circumferential side of the unrecorded portion, it is preferable to record the data such that the recording laser power in recording the data onto the edge on the inner circumferential side of the recording area adjacent to the edge on the outer circumferential side of the unrecorded portion is relatively weak or the weakest, compared to the recording laser power in recording the data into an area portion other than the edge on the inner circumferential side of the recording area adjacent to the edge on the outer circumferential side of the unrecorded portion.

### (2-2) Second Operation Example

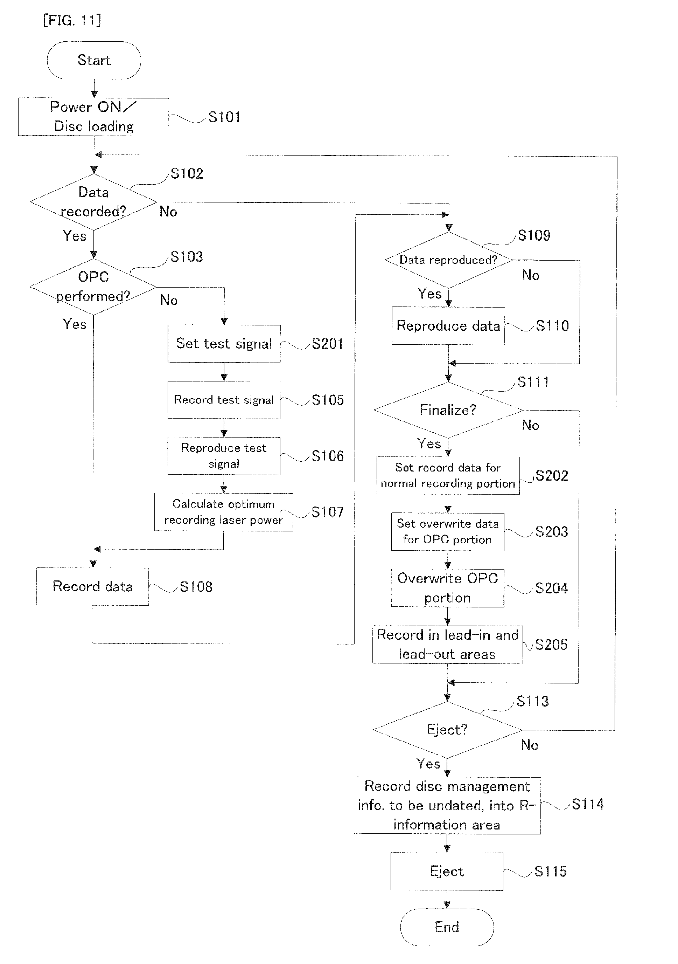

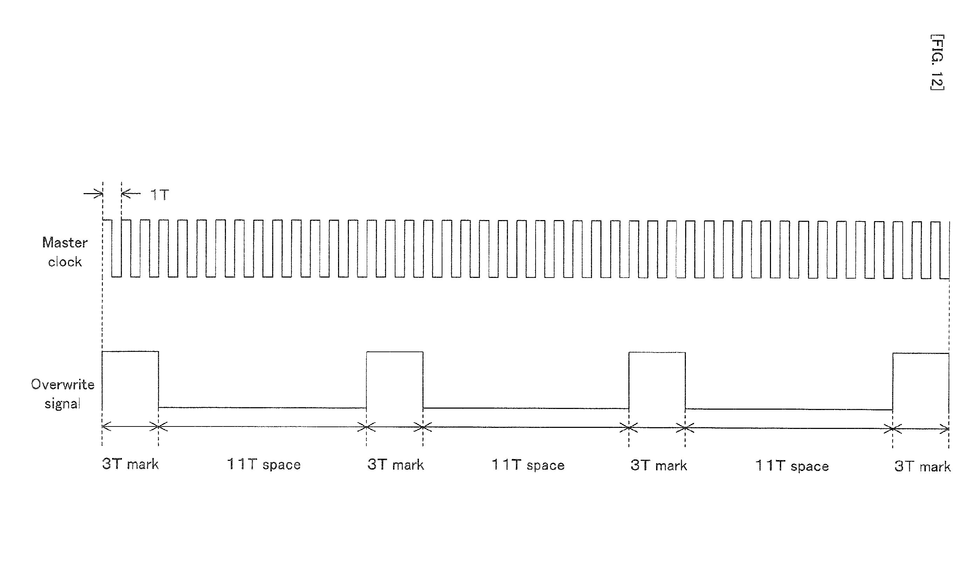

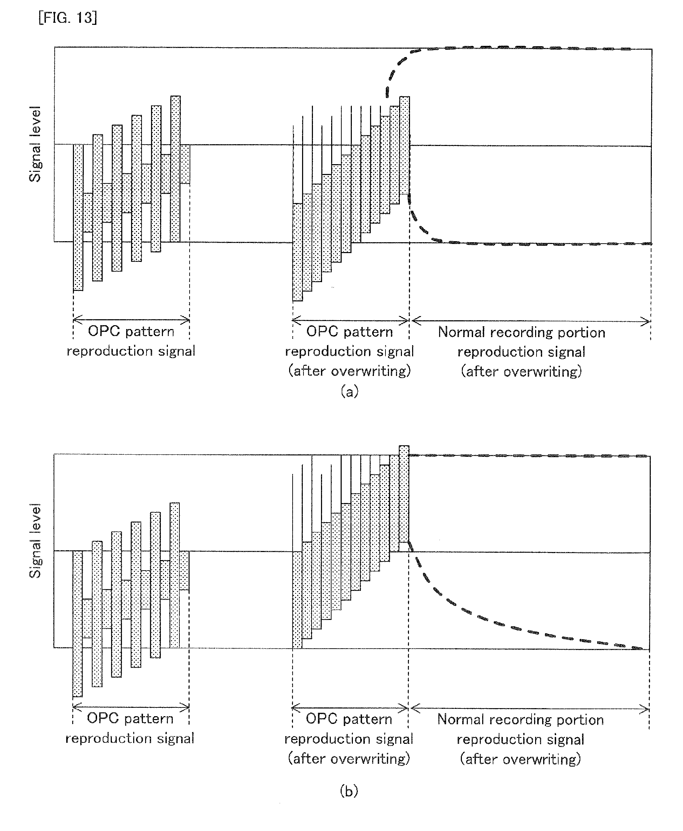

Next, with reference to FIG. 11 to FIGs. 13, an explanation will be given for a second operation example, as the operation principle of the recording / reproducing apparatus 200 in the embodiment. Here, the overall outline of the second operation example will be explained by using FIG. 11, and supplementary or more detailed explanation will be given by using FIG. 12 and FIGs. 13. FIG. 11 is a flowchart conceptually showing a flow of the second operation example of the recording / reproducing apparatus 200 in the embodiment. Incidentally, the same constituent elements and operations as those of the first operation example carry the same numerical references and step numbers, and the explanation thereof will be omitted.

As shown in FIG. 11, even in the second operation example, the operations in the step S101 to the step S103, and the step S105 to the step S111 are performed, as in the first operation example. Incidentally, in the second operation example, the OPC pattern, which is recorded by sequentially changing the recording laser power to be increased, is set as a test signal (step S201).

Particularly in the second operation example, if it is judged that the finalize process is performed (the step S111: Yes), firstly, data to be recorded into the unrecorded portion (specifically, the first three sectors in each recording area portion of the ODTA 103b (113b)) is set (step S202). In this regard, for example, the above-mentioned dummy data or the like may be set as the data to be recorded into the unrecorded portion. Alternatively, it may be the same data as the overwrite data set in a next step S203. Then, the overwrite data is set, which is overwritten on the recording area where the OPC pattern is recorded (step S203).

Now, with reference to FIG. 12, an explanation will be given for one specific example of the overwrite data set in the step S203 in FIG. 11. FIG. 12 is a signal waveform diagram conceptually showing one specific example of the overwrite data set in the second operation example.

As shown in the upper part of FIG. 12, it is assumed that the recording / reproducing apparatus 200 performs the recording operation on the basis of a master clock with a predetermined frequency. One clock of the master clock is a reference for an nT mark or nT space (wherein n is an integer of 2 or more), which constitute data to be recorded. For example, a 3T mark means a mark signal component having a three clock frequency. An 11T space means a space signal component having an 11 clock frequency. The overwrite data set in the step S203 in FIG. 11 has the mark signal component with a relatively short (or small) frequency (or signal width or pulse width) and has the space signal component with a relatively long frequency. Alternatively, the overwrite data is set such that the frequency of the mark signal component is shorter than that of the space signal component. For example, as shown in FIG. 12, the overwrite data set in the step S203 in FIG. 11 is set as a combination of the 3T mark and the 11T space. Of course, it will be understood that the overwrite data defined by another combination of mark signal component and space signal component may be set.

In FIG. 11 again, the overwrite data set in the step S203 is recorded into the ODTA 103b (113b) where the OPC pattern is recorded (step S204). At the same time, the data set in the step S202 is also recorded into the unrecorded portion. Then, the dummy data or the like is recorded into the lead-in area 102 and the lead-out area 118 (step S205). Incidentally, it will be understood that the recording of the dummy data or the like into the lead-in area 102 and the lead-out area 118 is also performed in the finalize process in the first operation example. After that, as in the first operation example, the operations in the step S113 to the step S115 are performed.

As explained above, according to the second operation example, the overwrite data defined by the mark signal component having a relatively short cycle and the space signal component having a relatively long cycle is overwritten on the ODTA 103b (113b) with the OPC pattern recorded. The benefits which can be received by adopting such configuration will be explained with reference to FIGs. 13. FIGs. 13 are graphs conceptually showing the signal level of the reproduction signal of each of the OPC pattern recorded in the second operation example, the OPC pattern overwritten with overwrite data, and an unrecorded portion with dummy data recorded, and the signal level of the reproduction signal of each of the OPC pattern recorded in a second comparison operation example, the OPC pattern overwritten with overwrite data, and an unrecorded portion with dummy data recorded.

The reproduction signal obtained by reproducing the OPC pattern before the overwriting of the overwrite data is shown on the left side of FIG. 13(a). The reproduction signal corresponding to the 3T mark and the 11T space appears repeatedly.

The reproduction signal obtained by the reproducing the OPC pattern after the overwriting of the overwrite data is shown in the center of FIG. 13(a). Generally, the recording pits formed by the overwriting of the overwrite data and the recording pits formed by the recording of the OPC pattern interfere, and the entire reproduction signal is obtained as a reproduction signal darker than before the overwriting of the overwrite data. In other words, the signal level of the reproduction signal of the OPC pattern after the overwriting of the overwrite data is higher than before the overwriting of the overwrite data, on the basis of a center potential. However, in the second operation example, the overwriting is performed with the overwrite data defined by the mark signal component having a relatively short cycle and the space signal component having a relatively long cycle. Since the cycle of the space signal component is relatively long, if the overwriting is performed with the overwrite data, the recording pits which are relatively bright are formed onto the optical disc 100. Therefore, the reproduction signal obtained by reproducing the OPC pattern after the overwriting of the overwrite data is hardly dark or not very dark, compared to the reproduction signal obtained by reproducing the OPC pattern before the overwriting of the overwrite data. In other words, the signal level of the reproduction signal of the OPC pattern after the recording of the overwrite data does not change much, compared to the signal level of the reproduction signal of the OPC pattern before the overwriting of the overwrite data.

The reproduction signal obtained by reproducing the unrecorded portion after the recording of the dummy data is shown on the right side of FIG. 13(a). The signal level of the reproduction signal has substantially the same level as the center potential. This is caused by that the OPC pattern is overwritten with the overwrite data defined by the mark signal component having a relatively short cycle and the space signal component having a relatively long cycle. The reason is that the signal level of the reproduction signal of the OPC pattern after the recording of the overwrite data does not change much, compared to the signal level of the reproduction signal of the OPC pattern before the recording of the overwrite data, so that it is possible to reduce the influence on the reproduction quality of the reproduction signal in the normal recording portion by the overwriting of the overwrite data. Therefore, it can be smoothly connected to the reproduction signal obtained by reproducing the normal recording portion.

On the other hand, an explanation will be given for the reproduction signals of the unrecorded portion and the OPC pattern in the second comparison operation example in which the overwriting is performed not with the overwrite data defined by the mark signal component having a relatively short cycle and the space signal component having a relatively long cycle, but simply with "00h" data as the overwrite data.

The reproduction signal obtained by reproducing the OPC pattern before the overwriting of the overwrite data is shown on the left side of FIG. 13(b). The reproduction signal corresponding to the 3T mark and the 11T space appears repeatedly.

The reproduction signal obtained by the reproducing the OPC pattern after the overwriting of the overwrite data is shown in the center of FIG. 13(b). The recording pits formed by the overwriting of the overwrite data and the recording pits formed by the recording of the OPC pattern interfere, and the entire reproduction signal is obtained as a reproduction signal darker than before the overwriting of the overwrite data. In other words, the signal level of the reproduction signal of the OPC pattern after the overwriting of the overwrite data is higher than before the overwriting of the overwrite data, on the basis of the center potential.

The reproduction signal obtained by reproducing the unrecorded portion after the recording of the dummy data is shown on the right side of FIG. 13(b). The signal level of the reproduction signal is higher than the center potential. This is because the signal level of the reproduction signal of the OPC pattern after the overwriting of the overwrite data is higher than before the overwriting of the overwrite data on the basis of the center potential, so that the influence on the reproduction quality of the reproduction signal in the normal recording portion increases. Namely, it is because the signal level of the reproduction signal obtained by reproducing the OPC basic pattern adjacent to the unrecorded portion is distributed one-sided to a high level, compared to the center potential, so that it cannot be smoothly connected to the reproduction signal obtained by reproducing the normal recording portion. Thus, it is hardly possible to preferably read the reproduction signal obtained by reproducing the normal recording portion, and as a result, it is hardly possible to read the sector ID of the first three sectors in each recording area portion of the ODTA 103b (113b).

As described above, according to the second comparison operation example, it is hardly possible to read the sector ID of the first three sectors in each recording area portion of the ODTA 103b (113b), which are left unrecorded on purpose. However, according to the second operation example, it is possible to minimize the influence on the unrecorded portion by the overwriting of the overwrite data into the OPC pattern. By this, it is possible to preferably read the sector ID of the first three sectors in each recording area portion of the ODTA 103b (113b), and it is possible to secure the operation stability of the recording / reproducing apparatus 200 (or the read-only drive).

Incidentally, in the second operation example, the OPC pattern, which is recorded by sequentially changing the recording laser power to be increased, is set as the test signal in the OPC process. However, as explained in the above-mentioned first operation example, the OPC pattern, which is recorded by sequentially changing the recording laser power to be reduced, may set as the test signal. Alternatively, such an OPC pattern may be set as the test signal that the power value of the recording laser power in recording the OPC basic pattern to be recorded in the end is smaller than that in recording the other OPC basic patterns. Namely, it is also possible to adopt such configuration that the features of the first operation example are combined with those of the second operation example. By this, it is possible to further inhibit the influence on the unrecorded portion by the overwriting of the overwrite data into the OPC pattern. By this, it is possible to preferably read the sector ID of the first three sectors in each recording area portion of the ODTA 103b (113b), and it is possible to secure the operation stability of the recording / reproducing apparatus 200 (or the read-only drive).

Moreover, in a write-once type optical disc in which data can be recorded only once, the effect described in the embodiment is noticeable. This will be explained specifically. In case of a rewritable type optical disc in which data can be recorded a plurality of times, there is a demerit of increase in the processing load of the recording / reproducing apparatus; however, if the dummy data recorded after the OCP pattern recorded in the ODTA 103b (113b) is deleted, the above-mentioned various problems are not actualized. However, in case of the write-once type optical disc, the operations explained in the first operation example and the second operation example are extremely important from the viewpoint of operation stability. Of course, since the rewritable type optical disc has a merit that the trouble of deleting the OPC pattern can be saved, it can receive the proper benefits by using the above-mentioned configuration.

Moreover, in the explanation on the second operation example, an explanation is given for the operation of overwriting the ODTA 103b (113b) where the OPC pattern is recorded, with the overwrite data. However, it is not limited to this, and the above-mentioned overwrite data may be recorded on top of the data recorded in another recording area. For example, in the case where the data is recorded with an unrecorded portion provided and the overwrite data is recorded on top of a recording area adjacent to the unrecorded portion, it is preferable to record the overwrite data defined by the mark signal component having a relatively short cycle and the space signal component having a relatively long cycle.

Moreover, in the above-mentioned embodiment, the optical disc 100 is explained as one example of the recording medium, and the recorder or player related to the optical disc 100 is explained as one example of the recording / reproducing apparatus. The present invention, however, is not limited to the optical disc and the recorder thereof, and can be applied to other various recording media, and the recorders or players thereof, which support high density recording or high transfer rate.

The present invention is not limited to the above-described embodiment, and various changes may be made, if desired, without departing from the essence or spirit of the invention which can be read from the claims and the entire specification. A recording apparatus and method, and a computer program for recording control, which involve such changes, are also intended to be within the technical scope of the present invention.

### Industrial Applicability

The recording apparatus, the recording method, and the computer program according to the present invention can be applied to a high-density optical disc, such as a DVD, for example, and also applied to an information recording apparatus, such as a DVD recorder. Moreover, they can be applied to an information recording apparatus or the like, which is mounted on or can be connected to various computer equipment for consumer use or business use, for example.

## Claims

1. A recording apparatus comprising:
a recording device for recording record information with a variable recording power;
a recording control device for controlling said recording device to record the record information to be adjacent to an unrecorded portion where the record information is not recorded; and
a power controlling device for controlling the recording power such that the recording power in recording the record information which is recorded adjacent to the unrecorded portion out of the record information recorded under control of said recording control device is weaker than the recording power in recording the record information other than the record information which is recorded adjacent to the unrecorded portion.

2. The recording apparatus according to claim 1, wherein said recording control device controls said recording device to record calibration information for calibrating the recording power to be adjacent to the unrecorded portion, when the calibration information is recorded as the record information.

3. The recording apparatus according to claim 1, wherein said recording control device controls said recording device to record the record information such that an end edge portion of a recorded portion where the record information is already recorded is adjacent to the unrecorded portion.

4. The recording apparatus according to claim 1, wherein
said recording control device controls said recording device to record the record information such that at least one of a start edge portion and an end edge portion of a recorded portion where the record information is already recorded is adjacent to the unrecorded portion, and
said power controlling device controls the recording power such that the recording power in recording the record information which is recorded at least in the end edge portion is weaker than the recording power in recording the record information other than the record information which is recorded at least in the end edge portion.

5. The recording apparatus according to claim 1, wherein said power controlling device controls the recording power such that the record information which is recorded under the control of said recording control device is recorded with a recording power which decreases in a stepwise manner by a predetermined amount or which decreases continuously by a predetermined ratio.

6. The recording apparatus according to claim 1, further comprising an overwrite controlling device for controlling said recording device to overwrite a recorded portion where the record information is already recorded adjacent to the unrecorded portion, with overwrite information as the record information,
the overwrite information being for overwriting in which a ratio of presence of a mark signal component is smaller than a ratio of presence of a space signal component.

7. A recording apparatus comprising:
a recording device for recording record information; and
an overwrite controlling device for controlling said recording device to overwrite a recorded portion where the record information is already recorded adjacent to an unrecorded portion where the record information is not recorded, with overwrite information as the record information,
the overwrite information being for overwriting in which a ratio of presence of a mark signal component is smaller than a ratio of presence of a space signal component.

8. The recording apparatus according to claim 7, wherein said overwrite controlling device controls said recording device to overwrite the recorded portion which is adjacent to the unrecorded portion and where calibration information for calibrating a recording power of said recording device is recorded as the record information, with the overwrite information as the record information.

9. The recording apparatus according to claim 7, wherein said overwrite controlling device controls said recording device to record the overwrite information as the record information into the recorded portion at least whose end edge portion is adjacent to the unrecorded portion.

10. The recording apparatus according to claim 7, wherein said overwrite controlling device controls said recording device to record the overwrite information in which a signal width of the mark signal component is smaller than a signal width of the space signal component, as the record information.

11. The recording apparatus according to claim 7, wherein
said recording device record the record information with a variable recording power, and
said recording apparatus further comprises a power controlling device for controlling the recording power such that the recording power in recording the record information which is recorded adjacent to the unrecorded portion out of the record information which is recorded adjacent to the unrecorded portion is weaker than the recording power in recording the record information other than the record information which is recorded adjacent to the unrecorded portion.

12. A recording method in a recording apparatus comprising: a recording device for recording record information with a variable recording power, said recoding method comprising:
a recording control process of controlling said recording device to record the record information to be adjacent to an unrecorded portion where the record information is not recorded; and
a power controlling process of controlling the recording power such that the recording power in recording the record information which is recorded adjacent to the unrecorded portion out of the record information recorded under control of said recording control device is weaker than the recording power in recording the record information other than the record information which is recorded adjacent to the unrecorded portion.

13. A recording method in a recording apparatus comprising: a recording device for recording record information, said recording method comprising:
a recording control process of controlling said recording device to record the record information; and
an overwrite controlling process of controlling said recording device to overwrite a recorded portion where the record information is already recorded adjacent to an unrecorded portion where the record information is not recorded, with overwrite information as the record information,
the overwrite information being for overwriting in which a ratio of presence of a mark signal component is smaller than a ratio of presence of a space signal component.

14. A computer program for recording control to control a computer provided in the recording apparatus according to claim 1, to make the computer function as at least one of said recording control device and said power controlling device.

15. A computer program for recording control to control a computer provided in the recording apparatus according to claim 7, to make the computer function as said overwrite controlling device.
